# EUROPÄISCHE PATENTANMELDUNG

(11) **EP 1 020 225 A1**
(43) Veröffentlichungstag der Anmeldung: **19.07.2000**
(21) Anmeldenummer: 99630005.9
(22) Anmeldetag: 04.01.1999
(51) Int. Cl.: B03B 9/06

(54) **Verfahren zur Separation von organischen Stoffgruppen aus Autoshredderleichtfraktionen**

(71) Anmelder: R.S.T. Luxembourg S.A., 1930 Luxemburg (LU)
(72) Erfinder: Schmidt, Hans, 38704 Liebenburg (DE)
(74) Vertreter: Weydert, Robert

(57) **Zusammenfassung**

Die Auto-Shredderleichtfraktionen (1) werden durch vorbereitende Verfahrensschritte, wie Fe-Metallabscheidung (2) und Zerkleinerung (3) auf ein einheitliches Körnungsband, trennfähig gemacht und anschließend einer Sichtung (4) zur Abtrennung der organischen Leichtfraktionen (15) unterzogen.

Das verbleibende granulatartige Schwergut wird zur weiteren Steigerung der Trennfähigkeit in einer Mehrfachsiebung (5) in mehrere Siebfraktionen aufgeteilt.

Die einzelnen Siebfraktionen werden jeweils separat einer weiteren Fe-Metallabscheidung (6,9,12) zur Abscheidung der bei der Zerkleinerung (3) noch freigesetzten Fe-Metallteile unterzogen und danach in gleicher Weise in NE-Metallabscheidern (7,10,13) von den NE-Metallen befreit.

Die verbleibenden metallfreien granulatartigen Schwerfraktionen werden in einer Dichtetrennung (8) in Mineralien (19) wie Glas, Keramik, Steine und in organische Stoffgruppen (18) aufgetrennt.

Die separierten organischen Leicht- (15) und Schwerfraktionen (18) bilden einen heizwertreichen und schadstoffentfrachteten Brennstoff zur thermischen Verwertung beispielsweise in Pyrolyse, Thermolyse oder anderen Entgasungs-/Vergasungsverfahren.

## Beschreibung

Die vorliegende Erfindung betrifft ein Verfahren zur Separatiion von kohlenstoffhaltigen Stoffgruppen aus Auto-Shredderleichtfraktionen.

Die Altauto-Verwertung erfolgt Überwiegend derart, daß nach dem manuellen Demontieren der größeren Kunststoffteile und Reifen sowie Ablassen aller Flüssigkeiten, die verbleibende Auto-Masse maschinell in kleine StUcke zerrissen (geshreddert) wird. Aus dem Shreddergut werden die wesentlichen Metallteile abgeschieden und recycelt. Als bisher nicht verwertbarer Reststoff bleibt die sogenannte Auto-Shredderleichtfraktion in einer Größenordnung von ca.23 Masse-% zurück.

Als Verfahren zur Beseitigung dieser Reststoffe dient entweder in geringem Umfang die Verbrennung in Müllverbrennungsanlagen oder Deponierung auf Abfalldeponien.

Außer der Umweltbelastung und der relativ hohen Kosten dieser Verfahren, läßt sich eine Müllverbrennungsanlage wegen der niedrigen Heizwerte der Abfälle nur mit relativ schlechtem thermischen Wirkungsgrad betreiben.

Der vorliegenden Erfindung liegt die Aufgabe zugrunde, die in Auto-Shredderleichtfraktionen enthaltenen organischen Stoffgruppen von den nichtbrennbaren Bestandteilen wie Fe-Metallen, NE-Metallen, Glas und anderen Mineralien zu separieren.

Die Aufgabe wird erfindungsgemäß dadurch gelöst, daß die Auto-Shredderleichtfraktionen durch vorbereitende Verfahrensschritte trennfähig gemacht und anschließend durch weitere Verfahrensschrittkombinationen in organische Stoffgruppen einerseits und anorganische Stoffgruppen, wie Mineralien und Metalle, separiert werden.

Die Erfindung wird an einem Ausführungsbeispiel durch die nachstehenden Ausführungen in Verbindung mit einem Fließschema näher erläutert.

Die Auto-Shredderleichtfraktion (1) wird zur Erzielung der erforderlichen Trennfähigkeit zunächst einer Fe-Metallabscheidung(2) unterzogen, um restliche Fe-Metallteile (16) abzuscheiden. Im nächsten Schritt wird das von wesentlichen Fe-Metallteilen befreite Material einer Zerkleinerung (3) zugeführt und auf eine einheitliche Maximal-Korngröße verarbeitet. Durch die vorherige Fe-Metallabscheidung (2) kann hierfür vorzugsweise eine relativ einfache SchneidmUhle verwendet werden.

Nach diesen vorbereitenden Verfahrensschritten ist das Material gut trennfähig und es erfolgt in einer Sichtung (4) die Abtrennung der flugfähigen leichten Organikfraktion (15).

Anschließend wird das granulatartige Schwergut aus dem Sichterunterlauf in einer Mehrfachsiebung (5) in mehrere, vorzugsweise drei, Siebfraktionen aufgeteilt und die Siebfraktionen jeweils separat einer weiteren Fe-Metallabscheidung (6, 9, 12) zur Abscheidung der bei der Zerkleinerung (3) noch freigesetzten kleinen Fe-Metallteile (16) unterzogen. Die abgeschiedenen Fe-Metalle aus den Metallabscheidungen (2, 6, 9, 12) werden in einem Container gesammelt und dem Fe-Metallrecycling zugeführt.

Die verbleibenden schweren, granulatartigen Siebfraktionen werden nun jeweils separat einer Ne-Metallabscheidung (7, 10, 13) unterworfen. Die abgeschiedenen NE-Metalle (17) aus den NE-Metallabscheidungen (7, 10, 13) werden in einem Container gesammelt und dem NE-Metallrecycling zugeführt.

Die nun von allen Metallen befreiten verbleibenden schweren granulatartigen Siebfraktionen werden jeweils separat einer vorzugsweise ballistischen Dichtetrennung (8, 11, 14) unterworfen. Dabei werden bei einem Dichteschnitt von ca. 2 g/cm³ die Mineralien (19) wie Glas, Keramik, Steine, Sand usw., von den Organikgranulaten abgetrennt. Die abgetrennten Mineralien werden entsprechend den Korngrößenklassen der vorausgegangenen Siebung (5) in Silos gesammelt und dem Baustoffrecycling zugeführt.

Die verbleibenden schweren Organikgranulate (18) werden mit den leichten Organikfraktionen (15) zusammengeführt und bilden heizwertreiches brennbares Material.

Die mit der Erfindung erzielten Vorteile bestehen insbesondere darin, daß durch die sequentielle Anordnung der Verfahrensschritte und deren Kombination miteinander die nichtbrennbaren Bestandteile wie NE-Metalle, Fe-Metalle und Mineralien mit hoher Trennschärfe abgeschieden und die Organik-Stoffgruppen separiert werden.

Die abgeschiedenen Fe-Metalle, NE-Metalle und Mineralien liegen in relativ sauberer Form vor und eignen sich zu Recycling-Rohstoffen.

Die separierten organischen Stoffgruppen sind hoch kohlenstoffhaltig und bilden einen heizwertreichen und schadstoffentfrachteten Brennstoff zur thermischen Verwertung beispielsweise in Pyrolyse, Thermolyse oder anderen Entgasungs-/Vergasungsverfahren.

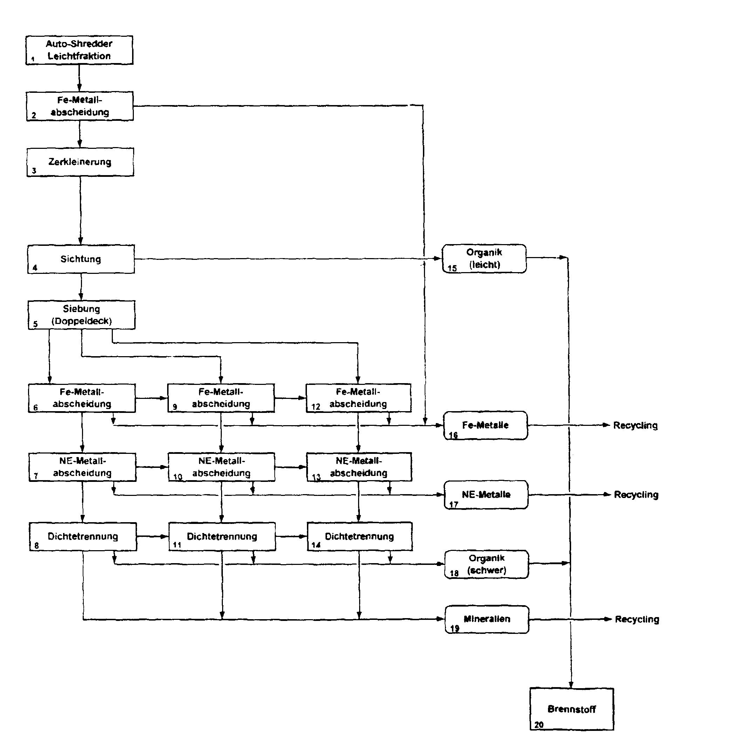

## Patentansprüche

1. Verfahren zur Separation von organischen Stoffgruppen aus Auto-Shredderleichtfraktionen mit den vorbereitenden Verfahrensschritten von Fe-Metallabscheidung und Zerkleinerung auf ein eiheitliches Körnungsband, dadurch gekennzeichnet, daß mit einem Sichtungsschritt zunächst alle flugfähigen Leichtfraktionen, die fast ausschließlich aus leichten organischen Stoffgruppen bestehen, abgetrennt werden und das verbleibende granulatartige Schwergut aus dem Unterlauf des Sichters zur weiteren Steigerung der Trennfähigkeit in einer Mehrfachsiebung in mehrere Siebfraktionen unterteilt wird und die Siebfraktionen jeweils separat einer weiteren Fe-Metallabscheidung und einer NE-Metallabscheidung sowie anschließend einer Dichttrennung zur Abtrennung der Mineralien, wie Glas, Keramik, Steine, von den schwereren organischen Stoffgruppen unterzogen wird.

2. Verfahren nach Anspruch 1, dadurch gekennzeichnet, daß aus den separierten organischen Leichtfraktionen und organischen Schwerfraktionen getrennt oder vermischt entweder direkt oder durch Verdichten Brennstoff hergestellt wird.
